# FASCICULE DE BREVET EUROPEEN

(11) **EP 1 372 311 B1**
(45) Date de publication et mention de la délivrance du brevet: **02.11.2005**
(21) Numéro de dépôt: 02291486.5
(22) Date de dépôt: 14.06.2002
(51) Int. Cl.: H04L 29/06, H04Q 7/22

(54) **Système et procédé de partage de données a partir d'un terminal WAP**
System und Verfahren zur Datenteilung von einem WAP-Endgerät
System and Method for sharing data from a Wap terminal

(43) Date de publication de la demande: 17.12.2003
(73) Titulaire: FRANCE TELECOM, 75015 Paris (FR)
(72) Inventeur: Leprince, Laurent, 91190 Gif/Yvette (FR); Guisnet, Bertrand, 92130 Issy les Moulineaux (FR)
(74) Mandataire: Lemoyne, Didier

(56) Documents cités:
- EP-A- 1 164 765
- GB-A- 2 361 603

## Description

La présente invention concerne un système et un procédé de partage de données à partir d'un terminal WAP (Wireless Application Protocol, soit protocole d'application sans fil).

L'invention s'applique plus particulièrement au partage à distance entre au moins un premier terminal WAP, visualisant au moins une donnée, et au moins un deuxième terminal WAP.

Un terminal dit "WAP" est un terminal équipé d'un navigateur WAP, compatible avec le protocole d'application sans fil, appelé WAP. Ledit protocole WAP est normalisé par l'organisme de normalisation du WAP, soit le WAP Forum.

Un serveur de diffusion de données d'un réseau de communication, par exemple le réseau Internet, fournit des données vers un terminal WAP lorsque celui-ci établit une connexion vers ledit serveur de diffusion de données.

Actuellement, l'évolution du travail coopératif en équipes, réparties par exemple sur plusieurs sites géographiques, rend nécessaire le partage de données. Le partage de données permet à plusieurs personnes de collaborer ensemble.

Les données à partager peuvent être de nature très diverse, par exemple une page vierge, un document intégrant une image, une photo ou un plan, un site web sur le réseau Internet, un fichier vidéo ou audio, etc...

Les systèmes existants de transmission de données permettent une transmission multipoint en temps réel sous forme de conférence multimédia, soit vocale, soit visuelle, soit écrite, etc...

Pour accéder ou bien échanger lesdites données de toute nature, les terminaux doivent être équipés d'une application spécifique aux dites données, ce qui requière une capacité de traitement et une capacité mémoire importantes sur lesdits terminaux.

La bande passante nécessaire pour accéder ou échanger lesdites données est également importante.

Par conséquent, lesdits systèmes sont réservés pour des terminaux à grande capacité mémoire et de traitement, terminaux de type ordinateur personnel (ou PC, Personal Computer) ou bien de type assistant personnel numérique (ou PDA, Personal Digital Assistant), raccordés sur des réseaux de télécommunications à large bande passante tels que les réseaux de télécommunications fixes.

De ce fait, le partage de données est peu adapté aux réseaux cellulaires de communications avec les mobiles, ainsi qu'à des terminaux sans grande capacité mémoire, notamment les terminaux WAP.

Par ailleurs, dans le document EP 1 164 765 est présenté une méthode pour partager un contenu dans un réseau sans fil. Cette méthode permet à un utilisateur, équipé d'un terminal mobile WAP ou i-mode (appelé A), d'envoyer vers au moins un deuxième terminal mobile WAP ou i-mode une adresse URL (Uniform Resource Locator, soit localisateur de ressources uniformes) permettant au destinataire de consulter un contenu. Elle permet également d'envoyer un contenu référencé par une adresse URL que l'utilisateur consulte en ligne. Le terminal A envoie cette URL ou ce contenu à un autre utilisateur par l'intermédiaire d'un serveur d'application.

Tel que décrit dans ce document, le contenu peut être mis à disposition d'au moins un deuxième terminal mobile ou i-mode. La méthode présentée ne permet d'aucune façon la navigation en mode partagé sur ledit contenu.

Aussi, le problème technique à résoudre par l'objet de la présente invention est de proposer un système et un procédé de partage entre au moins un premier terminal WAP, visualisant au moins une donnée située dans au moins un réseau de communication, et au moins un deuxième terminal WAP, mettant en oeuvre au moins une fonction de diffusion automatique en mode "push", qui permettrait de remédier aux inconvénients des systèmes existants en rendant accessible le partage de données aux terminaux WAP.

La solution au problème technique posé consiste, selon la présente invention définie par les revendications indépendantes 1 et 9, en ce que ledit système comprend au moins un serveur de partage de données, situé dans ledit réseau de communication, apte à recevoir et à stocker au moins une demande de partage de ladite donnée en provenance dudit premier terminal WAP et apte à recevoir ladite donnée en provenance d'au moins un serveur de diffusion de données et à transmettre ladite donnée après filtrage et remise en forme vers lesdits premier et deuxième terminaux WAP pour naviguer simultanément avec ladite donnée, le partage de ladite donnée étant interactif entre lesdits premier et deuxième terminaux WAP (10, 11, 12, 13).

L'invention a également pour objet un procédé de partage entre au moins un premier terminal WAP, visualisant au moins une donnée située dans au moins un réseau de communication, et au moins un deuxième terminal WAP selon la revendication indépendante 11, mettant en oeuvre au moins une fonction de diffusion automatique en, mode "push", remarquable en ce que ledit procédé comporte les étapes consistant à : visualiser par au moins un premier terminal WAP au moins une donnée en provenance d'au moins un serveur de diffusion de données, situé dans au moins un réseau de communication ; recevoir et stocker sur au moins un serveur de partage de données au moins une demande de partage de ladite donnée en provenance dudit premier terminal WAP ; recevoir et stocker sur ledit serveur de partage de données au moins un paramètre nécessaire au partage de ladite donnée ; transmettre, par ledit serveur de partage de données vers ledit serveur de diffusion de données, une demande pour la réception de ladite donnée ; recevoir et stocker ladite donnée sur ledit serveur de partage de données en provenance dudit serveur de diffusion de données; transmettre, par ledit serveur de partage de données vers au moins un serveur WAP de diffusion automatique en mode "push", au moins une commande d'émission d'au moins une demande de chargement automatique de données ; transmettre, par ledit serveur WAP de diffusion automatique en mode "push" vers ledit deuxième terminal WAP, ladite demande de chargement automatique de données comprenant au moins une référence associée à ladite donnée ; transmettre, à partir dudit deuxième terminal WAP vers ledit serveur de partage de données, au moins une réponse à ladite demande de chargement automatique de données ; filtrer et remettre en forme ladite donnée reçue sur ledit serveur de partage de données ; copier ladite donnée traitée par ledit serveur de partage de données pour obtenir au moins une donnée identique à ladite donnée traitée ; transmettre lesdites données identiques par ledit serveur de partage de données vers lesdits premier et deuxième terminaux WAP ; visualiser par lesdits premier et deuxième terminaux WAP ladite donnée traitée.

Ledit serveur de partage de données sert d'intermédiaire entre lesdits premier et deuxième terminaux WAP et réalise la gestion dudit partage de données.

Il sert d'interface avec le réseau de communication, dans lequel se situe ledit serveur de diffusion de données, et avec le réseau de télécommunications, sur lequel sont raccordés les terminaux WAP.

Il reçoit les requêtes en provenance des utilisateurs, les analyse, les renvoie vers le serveur de diffusion de données. Il identifie lesdits utilisateurs.

Il dialogue avec le serveur WAP de diffusion automatique en mode "push" pour commander la diffusion desdites données.

Il récupère ladite donnée à partager, l'analyse et la remet en forme avant de la renvoyer vers les utilisateurs.

Il met en mémoire toutes les informations relatives au partage de ladite donnée, les contrôle et les gère tout au long du procédé conforme à l'invention.

Des modes de réalisation spécifics de l'invention sont décrits dans les revendications dépendantes.

Selon un mode de réalisation de l'invention, le partage de ladite donnée est mis en oeuvre avec lesdits premier et deuxième terminaux WAP (10, 11, 12, 13) connectés indifféremment en fixe ou en mobile à un réseau fixe ou cellulaire de télécommunications.

Selon l'invention, le partage de ladite donnée est réalisé à distance.

Lesdits système et procédé de partage de données sont compatibles avec tous les types de terminaux WAP, indifféremment fixes ou mobiles, raccordés sur tous les types de réseaux de télécommunications, fixes ou cellulaires.

Par conséquent, l'invention permet le partage à distance entre des terminaux WAP de différente nature, indifféremment fixes ou mobiles.

Conformément à un mode de réalisation de l'invention, le partage de ladite donnée est mis en oeuvre simultanément avec au moins une communication vocale entre lesdits premier et deuxième terminaux WAP par l'intermédiaire d'au moins un réseau de télécommunications.

Conformément à un mode de réalisation de l'invention, le partage de ladite donnée est mis en oeuvre simultanément avec au moins une communication écrite, en mode instantané, entre lesdits premier et deuxième terminaux WAP par l'intermédiaire d'au moins un réseau de télécommunications.

Bien que non indispensable au fonctionnement technique dudit système de partage de données, la liaison vocale ou bien la liaison écrite facilite le dialogue pendant le partage de données entre les différents utilisateurs distants.

Selon un mode de réalisation de l'invention, ledit deuxième terminal WAP répondant pour autoriser ledit partage de données après la transmission par ledit serveur WAP de diffusion automatique en mode "push", ledit procédé comporte les étapes consistant à : transmettre, par ledit serveur de partage de données vers ledit serveur WAP de diffusion automatique en mode "push", au moins une commande d'émission d'au moins un message d'indication d'une demande de partage de ladite donnée ; transmettre, par ledit serveur WAP de diffusion automatique en mode "push" vers ledit deuxième terminal WAP, ledit message d'indication de ladite demande de partage de ladite donnée ; autoriser le partage de ladite donnée par ledit deuxième terminal WAP vers ledit serveur de partage de données.

A la place de ladite demande de chargement automatique, transmise vers ledit serveur WAP de diffusion automatique en mode "push", ledit serveur de partage de données peut commander l'émission d'un message d'indication d'une demande de partage de données.

Ledit message permet à l'utilisateur dudit deuxième terminal WAP d'accepter ou non la transmission de ladite donnée à partager.

L'invention est également remarquable en ce que, ladite donnée étant visualisée par lesdits premier et deuxième terminaux WAP, ledit procédé de partage de ladite donnée est interactif entre lesdits premier et deuxième terminaux WAP et comporte les étapes consistant à : transmettre, à partir de l'un desdits premier et deuxième terminaux WAP vers ledit serveur de partage de données, au moins une première demande de consultation d'au moins une deuxième donnée à partir de ladite donnée partagée ; suspendre le traitement sur ledit serveur de partage de données d'une deuxième demande de consultation de données en provenance de l'un desdits premier et deuxième terminaux WAP, jusqu'à la fin du traitement de ladite première demande de consultation de données ; recevoir et stocker sur ledit serveur de partage de données au moins une référence associée à ladite deuxième donnée ; transmettre, par ledit serveur de partage de données vers ledit serveur de diffusion de données, une demande pour la réception de ladite deuxième donnée ; recevoir et stocker ladite deuxième donnée sur ledit serveur de partage de données en provenance dudit serveur de diffusion de données ; reconnaître par ledit serveur de partage de données l'existence du partage de données entre lesdits premier et deuxième terminaux WAP ; transmettre, par ledit serveur de partage de données vers ledit serveur WAP de diffusion automatique en mode "push", au moins une commande d'émission d'au moins une demande de chargement de données ; transmettre, par ledit serveur WAP de diffusion automatique en mode "push" vers l'un desdits premier et deuxième terminaux WAP, ladite demande de chargement de données comprenant au moins ladite référence associée à ladite deuxième donnée ; transmettre, à partir de l'un desdits premier et deuxième terminaux WAP vers ledit serveur de partage de données, au moins une réponse à ladite demande de chargement de données ; filtrer et remettre en forme ladite deuxième donnée reçue sur ledit serveur de partage de donnée ; copier ladite deuxième donnée traitée par ledit serveur de partage de données pour obtenir au moins une donnée identique à ladite deuxième donnée traitée ; transmettre lesdites deuxièmes données identiques par ledit serveur de partage de données vers lesdits premier et deuxième terminaux WAP ; visualiser par lesdits premier et deuxième terminaux WAP ladite deuxième donnée traitée.

Le partage de ladite donnée étant établit entre les utilisateurs, celui-ci peut se poursuivre avec seulement ledit premier terminal WAP comme initiateur de toute consultation de données. Le partage de données est alors dit passif, vis à vis dudit deuxième terminal WAP.

Lorsque lesdits premier et deuxième terminaux WAP 10, 11, 12, 13 peuvent demander le partage d'une donnée, ledit partage de données est interactif.

Dans ce cas, ledit serveur de partage de données reconnaît un partage d'une première donnée et peut recevoir une demande de consultation d'une deuxième donnée à partager, aussi bien en provenance dudit premier que dudit deuxième terminal WAP.

Selon un mode de réalisation de l'invention, ledit serveur de partage de données contrôle et gère au moins un droit d'accès à ladite donnée par ledit deuxième terminal WAP.

La gestion d'au moins un droit d'accès est utilisé, entre autres, lorsque ladite donnée contient une partie d'informations personnelles que ledit premier terminal WAP ne souhaite pas partager avec ledit deuxième terminal WAP, telle que des informations confidentielles sur un serveur dans un réseau privé de communication d'entreprise, ou bien lorsqu'un des utilisateurs n'a pas les droits d'accès suffisants pour pouvoir accéder aux dites données.

La description qui va suivre en regard du dessin annexé, donné à titre d'exemple non limitatif, fera bien comprendre en quoi consiste l'invention, comment elle peut être réalisée et d'autres caractéristiques de l'invention en ressortiront.

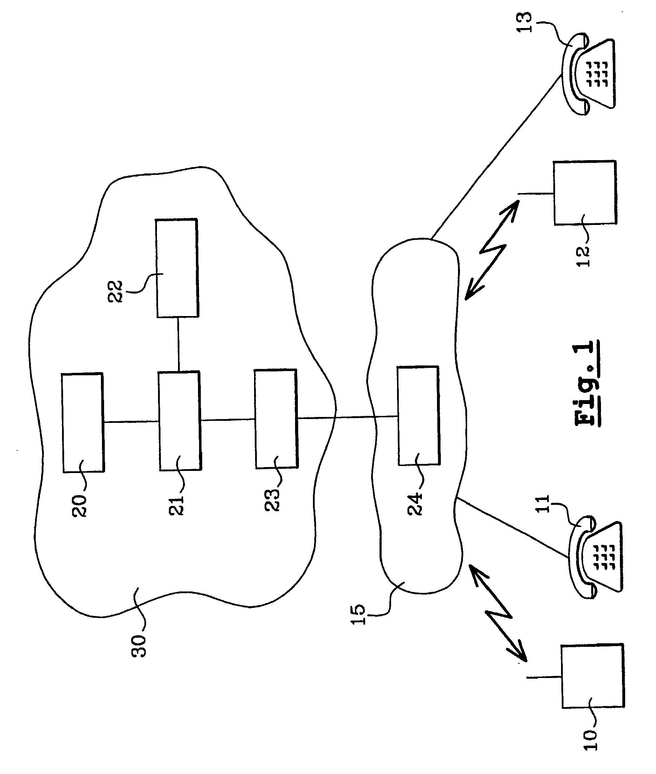

La figure 1 est un schéma de l'architecture générale du système de partage de données par un terminal WAP, conforme à l'invention.

L'utilisateur d'un premier terminal WAP 10, 11 est en communication à distance avec l'utilisateur d'un deuxième terminal WAP 12,13.

La communication peut également être établie à distance avec plusieurs interlocuteurs, en plus desdits premier et deuxième terminaux WAP 10, 11, 12, 13.

L'objet de l'invention s'applique à tout type de terminal équipé d'un navigateur WAP, compatible avec le protocole d'application sans fil, appelé WAP (Wireless Application Protocol), que ledit terminal soit un terminal mobile 10, 12 ou non 11, 13.

Ladite communication entre les différents interlocuteurs distants peut être une communication vocale ou bien une vidéocommunication, établie par l'intermédiaire d'un réseau cellulaire de télécommunications pour les mobiles ou bien par l'intermédiaire d'un réseau filaire de télécommunications fixes.

Ladite communication entre les différents interlocuteurs distants peut également être une communication écrite, de manière à permettre un échange en temps réel ou en quasi-temps réel. Ladite communication écrite est, par exemple, une communication par une messagerie électronique ou bien par une messagerie instantanée de type "chat" ou "instant messaging".

Au cours de ladite communication établie, l'utilisateur dudit premier terminal WAP 10, 11 ouvre un navigateur WAP, en place sur ledit premier terminal WAP 10, 11. Ledit navigateur WAP lui permet d'interroger un serveur 20 de diffusion de données pour recevoir des informations, que l'utilisateur souhaite partager.

Ledit serveur 20 de diffusion de données est situé dans tout type de réseau 30 de communication, par exemple le réseau Internet ou un réseau intranet privé de communication d'entreprise, qui comprend au moins un serveur de diffusion de données.

La connexion entre ledit premier terminal WAP 10, 11 et ledit serveur 20 de diffusion de données est établie par l'intermédiaire dudit réseau 15 de télécommunications, indifféremment fixes ou cellulaires, auquel est raccordé ledit premier terminal WAP 10, 11.

En général, il existe un équipement 24 de gestion d'accès à un réseau de communication dans les différents réseaux 15 de télécommunications, indifféremment fixes ou cellulaires, pour établir la connexion avec un réseau 30 de communication.

Par exemple, dans le cas d'un réseau 15 de télécommunication fixe, ledit équipement 24 de gestion d'accès à un réseau 30 de communication est un équipement appelé "NAS" (Network Access Server, soit serveur d'accès réseau).

Par exemple, dans le cas d'un réseau 15 de télécommunications pour les mobiles de type GPRS (General Packet Radio Service, soit service général de radiocommunication en mode paquet), ledit équipement 24 de gestion d'accès à un réseau 30 de communication est un équipement appelé "GGSN (Gateway GPRS Service Node, soit noeud de service GPRS de transit).

Selon la technologie dudit réseau 30 de communication, ledit équipement 24 de gestion d'accès à un réseau de communication établit la connexion avec un équipement 23 d'interface WAP appelé "Gateway WAP", situé dans ledit réseau 30 de communication dans lequel se trouve ledit serveur 20 de diffusion de données, lorsque ledit équipement 23 d'interface WAP ou "Gateway WAP" existe.

Ledit serveur 20 de diffusion de données transfère une donnée vers ledit premier terminal WAP 10, 11.

Ladite donnée transférée est de toute nature, par exemple une page au format WML (Wireless Markup Language, soit langage à balisage pour sans fil), un contenu au format XML (eXtensible Markup Language, soit langage à balisage évolué), une image au format flash ou bien tout autre format de données.

Si nécessaire, dans ledit réseau 30 de communication dans lequel est situé ledit serveur de données, au moins un équipement d'adaptation de contenus peut être utilisé de manière à transformer le contenu desdites données de manière à les rendre compatible avec un format accessible depuis lesdits terminaux WAP.

L'utilisateur dudit premier terminal WAP 10, 11 actionne une demande de partage de ladite donnée visualisée. Ladite demande de partage de données, en provenance dudit premier terminal WAP 10, 11, est transmise et stockée dans un serveur 21 de partage de données.

De ce fait, ledit premier terminal WAP envoie vers ledit serveur 21 de partage de données une requête, qui comprend au moins un paramètre concernant le partage de données.

Ledit paramètre comprend au moins une référence de ladite donnée visualisée par ledit premier terminal WAP 10, 11, ainsi que l'identifiant dudit premier terminal WAP 10, 11. Ledit identifiant est, par exemple, le numéro MSISDN du premier terminal WAP 10, 11 (soit Mobile Subscriber Integrated Service Digital Number).

Ladite requête, vers ledit serveur 21 de partage de données, indique également avec quel deuxième terminal WAP 12, 13 ledit premier terminal WAP 10, 11 souhaite partager ladite donnée.

L'utilisateur dudit premier terminal WAP 10, 11 peut indiquer le numéro téléphonique de l'utilisateur dudit deuxième terminal WAP 12, 13, indifféremment raccordé en fixe ou en mobile. Il peut également indiquer l'identifiant dudit deuxième terminal WAP 12, 13 ou bien son adresse IP (Internet Protocol) ou son adresse sur messagerie ou tout autre adresse de communication.

Ladite donnée peut également être partagée avec plusieurs interlocuteurs distants, en plus desdits premier et deuxième terminaux WAP 10, 11, 12, 13.

Pour éviter d'entrer manuellement une liste par exemple de numéros téléphoniques, correspondant aux différents interlocuteurs distants, ledit premier terminal WAP 10, 11 peut mentionner la communication déjà établie avec lesdits interlocuteurs. Les équipements dudit réseau 15 de télécommunications, indifféremment fixes ou cellulaires, transfèrent alors les identifiants des différents interlocuteurs distants vers ledit serveur 21 de partage de données.

De plus, ledit premier terminal WAP 10, 11 peut définir au moins un droit d'accès aux dites données à partager vers ledit deuxième terminal WAP 12, 13.

Lorsque ladite donnée est partagée avec plusieurs interlocuteurs distants, ledit droit d'accès à ladite donnée peut être différent selon l'interlocuteur distant.

Ledit serveur 21 de partage de données peut également gérer au moins un droit d'accès existant concernant ladite données à partager ou bien ledit deuxième terminal WAP 12, 13, reçu par l'intermédiaire dudit réseau 15 de télécommunications.

Tous lesdits paramètres concernant le partage de données sont mis en mémoire dans une base de données dudit serveur 21 de partage de données. Ladite base de données peut être physiquement incluse ou non dans ledit serveur 21 de partage de données.

Ledit serveur 21 de partage de données envoie une requête vers ledit serveur 20 de diffusion de données pour demander la transmission de ladite donnée à partager.

Ledit serveur 20 de diffusion de données transmet ladite donnée vers ledit serveur 21 de partage de données.

Ledit serveur 21 de partage de données envoie une requête vers au moins un serveur WAP 22 de diffusion automatique en mode "push" pour commander au moins une demande de chargement automatique de données.

La diffusion automatique de messages en mode "push" permet l'envoie d'un message sans intervention, ni demande du destinataire dudit message. Ledit message transmis en mode push peut, soit contenir directement des informations, soit indiquer une adresse avec un lien hypertext pour accéder aux dites informations. Ladite diffusion automatique en mode "push" est normalisée par l'organisme de normalisation du WAP, soit le WAP Forum.

Selon la nature du réseau 15 de télécommunications sur lequel est raccordé ledit terminal WAP 10, 11, ledit serveur WAP 22 de diffusion automatique en mode "push" peut comprendre plusieurs équipements, tels qu'un équipement d'initiation de push (Push Initiator), un équipement d'interface de push ou "Push Proxy" ou tout autre équipement.

Ledit serveur 21 de partage de données transmet au moins ladite référence de ladite donnée à partager, ainsi que l'identifiant dudit deuxième terminal WAP 12, 13.

Ledit serveur WAP 22 de diffusion automatique en mode "push" envoie vers ledit deuxième terminal WAP 12, 13 une requête en mode "push", qui inclut au moins une demande de chargement automatique de données.

Ladite demande de chargement automatique de données inclut également l'adresse dudit serveur 21 de partage de données, qui a sollicité ledit serveur WAP 22 de diffusion automatique en mode "push".

Ledit deuxième terminal WAP 12, 13 reçoit de façon automatique ladite demande de chargement automatique de données, comprenant au moins ladite référence de ladite donnée à partager.

De façon automatique, ledit deuxième terminal WAP envoie une requête de réponse vers ledit serveur 21 de partage de données.

A la réception de ladite requête, ledit serveur 21 de partage de données identifie ledit deuxième terminal WAP 12, 13 concerné par ladite donnée à partager.

Ledit serveur 21 de partage de données filtre et remet en forme ladite donnée à partager, reçue en provenance dudit serveur 20 de diffusion de données et mise en mémoire dans ladite base de données.

Ladite donnée, en provenance dudit serveur 20 de diffusion de données, est filtrée en particulier lorsqu'elle inclut au moins un lien hypertext vers une deuxième donnée, située sur ledit serveur 20 de diffusion de données. Ledit lien hypertext est modifié de manière à prendre en compte le passage par ledit serveur 21 de partage de données, tout en permettant audit serveur 21 de partage de données de retrouver le lien hypertext d'origine.

Entre autres, ledit serveur 21 de partage de données remet en forme une donnée dont le contenu tient en plusieurs pages, de manière à créer autant de pages indépendantes.

En fonction de la nature du contenu de ladite donnée, ledit premier terminal WAP 10, 11 peut avoir transmis vers ledit serveur 21 de partage de données au moins un droit d'accès à ladite donnée à partager.

La gestion dudit droit d'accès est utilisé, en outre, lorsque ladite donnée contient une partie d'informations personnelles que ledit premier terminal WAP 10, 11 ne souhaite pas partager avec ledit deuxième terminal WAP 12, 13. Par exemple, si ladite donnée à partager est extraite à partir d'un réseau privé de communication d'entreprise avec certains contenus confidentiels auxquels ledit deuxième terminal WAP ne doit pas accéder. Par exemple, ledit serveur 21 de partage de données peut désactiver un lien hypertext permettant d'accéder aux dites données confidentielles.

Ledit serveur 21 de partage de données peut également gérer au moins un droit d'accès existant, concernant ladite donnée à partager ou bien ledit deuxième terminal WAP 12, 13, et reçu par l'intermédiaire dudit réseau 15 de télécommunications.

Une fois ladite donnée traitée, ledit serveur 21 de partage de données copie ladite donnée pour obtenir au moins une donnée identique à ladite donnée traitée.

Lorsque le partage de ladite donnée est prévu entre plusieurs deuxièmes terminaux WAP distants et lorsque les droits d'accès ou les filtrages sont différents pour certains utilisateurs, ledit serveur 21 de partage de données réalise autant de copie de ladite donnée traitée que de deuxièmes terminaux WAP distants ayants des droits d'accès différents.

Ledit serveur 21 de partage de données transmet aux dits deuxièmes terminaux WAP ladite donnée traitée en fonction des droits des différents utilisateurs, ainsi que des différentes remises en forme de contenus et des différents filtrages réalisés.

Ladite donnée est visualisée, si les réseaux et terminaux le permettent, quasiment en même temps par lesdits premier et deuxième terminaux WAP, qui peuvent naviguer simultanément.

La communication vocale ou écrite, déjà établie entre lesdits premier et deuxième terminaux WAP 10, 11, 12, 13, évite la surprise de l'utilisateur dudit deuxième terminal WAP 12, 13, mais ladite communication n'est pas techniquement indispensable au fonctionnement dudit système de partage de données, conforme à l'invention.

A la place de ladite demande de chargement automatique vers ledit serveur WAP 22 de diffusion automatique en mode "push", ledit serveur 21 de partage de données peut commander l'émission d'un message d'indication d'une demande de partage de données. Ledit message permet à l'utilisateur dudit deuxième terminal WAP 12, 13 d'accepter ou non la transmission de ladite donnée à partager.

Dans ce cas, ledit serveur WAP 22 de diffusion automatique en mode "push" envoie vers ledit deuxième terminal WAP 12, 13 une requête en mode "push", qui inclut au moins un message d'indication d'une demande de partage de données.

Ledit deuxième terminal WAP 12, 13 reçoit de façon automatique ledit message d'indication d'une demande de partage de données. Ledit message d'indication d'une demande de partage inclut également l'adresse dudit serveur 21 de partage de données, qui a sollicité ledit serveur WAP 22 de diffusion automatique en mode "push".

Lorsque l'utilisateur dudit deuxième terminal WAP 12, 13 accepte la transmission de ladite donnée partagée, ledit deuxième terminal WAP 12, 13 ouvre un navigateur WAP, en place sur ledit deuxième terminal WAP 12, 13, et envoie une requête vers ledit serveur 21 de partage de données.

De la même façon que précédemment, à la réception de ladite requête, ledit serveur 21 de partage de données identifie ledit deuxième terminal WAP 12, 13, qui accepte le partage de ladite donnée.

Les étapes suivantes se déroulent ensuite de la même manière que dans le cas de la transmission d'une demande de chargement automatique de données, jusqu'à ce que ladite donnée soit visualisée par lesdits premier et deuxième terminaux WAP.

L'ordre d'exécution des transmissions entre les équipements dudit système de partage de données peut être différent. Par exemple, la transmission de ladite donnée entre ledit serveur 20 de diffusion de données et le serveur 21 de partage de données peut être réalisée après la réception de l'autorisation dudit deuxième terminal WAP 12, 13.

De même, le filtrage et la remise en forme de ladite donnée peuvent être réalisés en parallèle avec le dialogue entre ledit serveur 21 de partage de données et ledit serveur WAP 22 de diffusion automatique en mode "push".

De plus, le traitement, la copie et la transmission de ladite donnée destinée au premier terminal WAP 10, 11 peuvent être réalisés indépendamment du traitement, de la copie et de la transmission de ladite donnée destinée au deuxième terminal WAP 12, 13.

Lesdits premier et deuxième terminaux WAP peuvent décider de sortir du partage de données et de naviguer séparément sur des données

De la même façon, ils peuvent décider de continuer ou non la communication vocale ou écrite en cours.

Dans le cas de la poursuite du partage de données, ladite donnée étant accessible par lesdits premier et deuxième terminaux WAP 10, 11, 12, 13, ledit partage peut être passif ou bien interactif.

Lorsque ledit partage de donnée est passif, seul ledit premier terminal WAP 10, 11 peut demander le partage d'une donnée. L'information de partage passif est transmise par ledit premier terminal WAP 10, 11 audit serveur 21 de partage de données lors de l'envoi de la requête avec les paramètres concernant le partage de données.

Dans le cas d'un partage passif, le procédé précédemment décrit est répété pour chaque nouvelle donnée à partager, par l'intermédiaire dudit système de partage de données conforme à l'invention.

Lorsque ledit partage de données est interactif, lesdits premier et deuxième terminaux WAP 10, 11, 12, 13 peuvent demander le partage d'une donnée. L'un desdits premier et deuxième terminaux WAP 10, 11, 12, 13 active alors un lien hypertext de ladite donnée visualisée.

Une requête est transmise vers ledit serveur 21 de partage de données, du fait de la modification réalisée précédemment sur ledit lien hypertext, pour consulter au moins une deuxième donnée à partager.

Lorsque ledit serveur 21 de partage de données reçoit ladite requête, il suspend le traitement de toute nouvelle demande de consultation de données, qui pourrait arriver en provenance de l'un desdits premier et deuxième terminaux WAP 10, 11, 12, 13, jusqu'à la fin du traitement de ladite première demande de consultation de données.

Ledit serveur 21 de partage de données identifie l'origine de ladite requête grâce, par exemple, à l'identifiant dudit terminal WAP émetteur de ladite requête et reconnaît l'existence d'un partage de données en cours.

Ledit serveur 21 de partage de données reçoit également au moins une référence associée à ladite deuxième donnée à partager et mise en mémoire dans ladite base de données.

Ledit serveur 21 de partage de données envoie une requête vers ledit serveur 20 de diffusion de données pour demander la transmission de ladite deuxième donnée à partager.

Ledit serveur 20 de diffusion de données transmet ladite deuxième donnée vers ledit serveur 21 de partage de données, qui stocke ladite deuxième donnée reçue.

Ledit serveur 21 de partage de données envoie une requête à vers ledit un serveur WAP 22 de diffusion automatique en mode "push" pour commander l'émission d'au moins une demande de chargement de données.

Ledit serveur 21 de partage de données transmet au moins ladite référence de ladite deuxième donnée à partager, ainsi que l'identifiant du destinataire de celle-ci soit lesdits premier et deuxième terminaux WAP 10, 11, 12, 13.

Ladite demande de chargement est transmise par ledit serveur WAP 22 de diffusion automatique en mode "push" vers ledit destinataire. Comme mentionné lors de la demande de partage de la première donnée, ladite demande de chargement peut être transmise soit de façon automatique, soit avec un message d'indication de demande de partage de données.

Dans le premier cas, ledit destinataire reçoit de façon automatique ledit message de chargement de données. Dans ce cas, de façon automatique, ledit terminal WAP 10, 11, 12, 13 destinataire envoie une requête de réponse vers ledit serveur 21 de partage de données.

Dans le second cas, ledit destinataire reçoit de façon automatique ledit message d'indication de demande de partage de données. Ledit destinataire peut alors accepter ou non la transmission de ladite deuxième donnée à partager, en envoyant une requête de réponse vers ledit serveur 21 de partage de données.

A la réception de ladite requête, ledit serveur 21 de partage de données identifie ledit terminal WAP 10, 11, 12, 13 comme participant à un partage de données en cours.

Comme précédemment décrit, ledit serveur 21 de partage de données filtre et traite ladite deuxième donnée à partager, reçue en provenance dudit serveur 20 de diffusion de données.

Comme précédemment décrit, en fonction de la nature du contenu de ladite donnée, ledit terminal WAP 10, 11, 12, 13 peut avoir transmis vers ledit serveur 21 de partage de données au moins un droit d'accès à ladite deuxième donnée à partager.

Ledit serveur 21 de partage de données peut gérer au moins un droit d'accès, associé à l'un desdits premier et deuxième terminaux WAP 10, 11, 12, 13 ou à la nature de ladite donnée à partager, et en provenance dudit réseau 15 de télécommunications.

Une fois ladite deuxième donnée traitée, ledit serveur 21 de partage de données copie ladite donnée pour obtenir au moins une donnée identique à ladite deuxième donnée traitée.

Lorsque le partage de ladite donnée est prévu entre plusieurs terminaux WAP distants, ledit serveur 21 de partage de données réalise autant de copie de ladite deuxième donnée traitée que de terminaux WAP distants ayant des droits d'accès ou des filtrages différents.

Ledit serveur 21 de partage de données transmet aux dits premier et deuxième terminaux WAP 10, 11, 12, 13 ladite donnée traitée en fonction des droits des différents utilisateurs, ainsi que des différentes remises en forme de contenus et des différents filtrages réalisés.

Ladite deuxième donnée est alors visualisée quasiment en même temps par lesdits premier et deuxième terminaux WAP, qui peuvent naviguer simultanément.

Bien que ladite communication vocale ou écrite existante ne soit pas techniquement indispensable au fonctionnement dudit système de partage de données, ledit partage de ladite donnée est facilité pour les différents utilisateurs grâce à celle-ci.

L'ordre d'exécution des transmissions entre les équipements dudit système de partage de données peut être différent. Par exemple, la transmission de ladite deuxième donnée entre ledit serveur 20 de diffusion de données et le serveur 21 de partage de données peut être réalisée après la réception de la demande de chargement de données.

De même, le filtrage et la remise en forme de ladite deuxième donnée peuvent être réalisés en parallèle avec le dialogue entre ledit serveur 21 de partage de données et ledit serveur WAP 22 de diffusion automatique en mode "push".

Ensuite, les différents utilisateurs peuvent indifféremment commander un partage de données et naviguer sur différentes données simultanément. Comme le traitement de ladite première demande de consultation de données est terminé, ledit serveur 21 de partage de données est disponible pour recevoir toute nouvelle demande de consultation de données, qui pourrait arriver en provenance de l'un desdits premier et deuxième terminaux WAP 10, 11, 12, 13.

Il est possible de passer d'un mode de partage de données sans demande de chargement d'une nouvelle donnée à un mode de partage avec demande de chargement d'une nouvelle donnée et inversement.

Cette information de chargement de données avec ou sans demande, transmise vers le destinataire de ladite donnée, est envoyée vers ledit serveur 21 de partage de données par l'initiateur du partage de ladite donnée en même temps que ledit paramètre concernant le partage de données.

Ceux-ci peuvent également décider de sortir du partage de données et de naviguer séparément sur des données. De la même façon, ils peuvent décider de continuer ou non la communication vocale ou écrite en cours.

## Revendications

1. Système de partage entre au moins un premier terminal WAP (10, 11), visualisant au moins une donnée située dans au moins un réseau (30) de communication, et au moins un deuxième terminal WAP (12, 13), mettant en oeuvre au moins une fonction de diffusion automatique en mode "push" vers le deuxième terminal WAP (12,13), **caractérisé en ce** ledit système comprend au moins un serveur (21) de partage de données, situé dans ledit réseau (30) de communication, apte à recevoir et à stocker au moins une demande de partage de ladite donnée en provenance dudit premier terminal WAP et apte à recevoir ladite donnée en provenance d'au moins un serveur (20) de diffusion de données et à transmettre ladite donnée après filtrage et remise en forme vers lesdits premier et deuxième terminaux WAP (10, 11, 12, 13) pour naviguer à distance simultanément avec ladite donnée, le partage de ladite donnée étant interactif entre lesdits premier et deuxième terminaux WAP (10, 11, 12, 13).

2. Système de partage selon la revendication 1, **caractérisé en ce que** le partage de ladite donnée est mis en oeuvre avec lesdits premier et deuxième terminaux WAP (10, 11, 12, 13) connectés indifféremment en fixe ou en mobile à un réseau (15) fixe ou cellulaire de télécommunications.

3. Système de partage selon l'une quelconque des revendications 1 à 2, **caractérisé en ce que** le partage de ladite donnée est mis en oeuvre simultanément avec au moins une communication vocale entre lesdits premier et deuxième terminaux WAP (10, 11, 12, 13) par l'intermédiaire d'au moins un réseau (15) de télécommunications.

4. Système de partage selon l'une quelconque des revendications 1 à 2, **caractérisé en ce que** le partage de ladite donnée est mis en oeuvre simultanément avec au moins une communication écrite, en mode instantané, entre lesdits premier et deuxième terminaux WAP (10, 11, 12, 13) par l'intermédiaire d'au moins un réseau (15) de télécommunications.

5. Système de partage selon l'une quelconque des revendications 1 à 4, **caractérisé en ce que** ladite donnée partagée est visualisée par lesdits premier et deuxième terminaux WAP (10, 11, 12, 13) pour naviguer simultanément.

6. Système de partage selon l'une quelconque des revendications 1 à 5, **caractérisé en ce que** ledit serveur (21) de partage de données est apte à dialoguer avec au moins un serveur WAP (22) de diffusion automatique en mode "push" pour réaliser le partage de ladite donnée avec ledit deuxième terminal WAP (12, 13).

7. Système de partage selon l'une quelconque des revendications 1 à 6, **caractérisé en ce que** ledit serveur (21) de partage de données est apte à contrôler et gèrer au moins un droit d'accès à ladite donnée par ledit deuxième terminal WAP (12, 13).

8. Système de partage selon l'une quelconque des revendications 1 à 7, **caractérisé en ce que**, ledit deuxième terminal WAP (12, 13) étant en communication vocale ou écrite avec ledit premier terminal WAP (10, 11), ledit deuxième terminal WAP (12, 13) est identifié par au moins ledit réseau (15) de télécommunications.

9. Serveur (21) de partage de données associable à un système de partage selon l'une quelconque des revendications 1 à 8, comprenant au moins un moyen de réception et de stockage d'au moins une demande de partage d'une donnée en provenance dudit premier terminal WAP (10, 11) et d'au moins une donnée à partager, un moyen de dialogue et de transmission avec au moins un serveur (20) de diffusion de données, un moyen de dialogue avec lesdits premier et deuxième terminaux WAP (10, 11, 12, 13), **caractérisé en ce qu'**il comprend un moyen de transmission de ladite donnée à partager après filtrage et remise en forme vers lesdits premier et deuxième terminaux WAP (10, 11, 12, 13), un moyen de réception et de stockage d'au moins un paramètre nécessaire au partage de ladite donnée, un moyen de filtrage et de remise en forme de ladite donnée à partager, un moyen de contrôle et de gestion d'au moins un droit d'accès à ladite donnée par ledit deuxième terminal WAP (12, 13), un moyen de reconnaissance et de gestion d'au moins un partage interactif de ladite donnée entre lesdits premier et deuxième terminaux WAP (10, 11, 12, 13), un moyen de dialogue et de transmission avec au moins un serveur WAP (22) de diffusion automatique en mode "push", un moyen de dialogue et de transmission avec au moins un réseau (15) de télécommunications pour connaître au moins l'identification dudit deuxième terminal WAP (12, 13).

10. Serveur (21) de partage de données associé à un système de partage selon la revendication 9, **caractérisé en ce que** ledit serveur (21) de partage de données est relié à une base de données pour le stockage d'informations.

11. Procédé de partage entre au moins un premier terminal WAP (10, 11), visualisant au moins une donnée située dans au moins un réseau (30) de communication, et au moins un deuxième terminal WAP (12, 13), mettant en oeuvre au moins une fonction de diffusion automatique en mode "push", ledit procédé comporte les étapes consistant à :
- visualiser par au moins un premier terminal WAP (10, 11) au moins une donnée en provenance d'au moins un serveur (20) de diffusion de données, situé dans au moins un réseau (30) de communication,
- recevoir et stocker sur au moins un serveur (21) de partage de données au moins une demande de partage de ladite donnée en provenance dudit premier terminal WAP (10, 11),
- recevoir et stocker sur ledit serveur (21) de partage de données au moins un paramètre nécessaire au partage de ladite donnée,
- transmettre, par ledit serveur (21) de partage de données vers ledit serveur (20) de diffusion de données, une demande pour la réception de ladite donnée,
- recevoir et stocker ladite donnée sur ledit serveur (21) de partage de données en provenance dudit serveur (20) de diffusion de données,
- transmettre, par ledit serveur (21) de partage de données vers au moins un serveur WAP (22) de diffusion automatique en mode "push", au moins une commande d'émission d'au moins une demande de chargement automatique de données,
- transmettre, par ledit serveur WAP (22) de diffusion automatique en mode "push" vers ledit deuxième terminal WAP (12, 13), ladite demande de chargement automatique de données comprenant au moins une référence associée à ladite donnée,
- transmettre, à partir dudit deuxième terminal WAP (12, 13) vers ledit serveur (21) de partage de données, au moins une réponse à ladite demande de chargement automatique de données,
- filtrer et remettre en forme ladite donnée reçue sur ledit serveur (21) de partage de données,
- copier ladite donnée traitée par ledit serveur (21) de partage de données pour obtenir au moins une donnée identique à ladite donnée traitée,
- transmettre lesdites données identiques par ledit serveur (21) de partage de données vers lesdits premier et deuxième terminaux WAP (10, 11, 12, 13),
- visualiser par lesdits premier et deuxième terminaux WAP (10, 11, 12, 13) ladite donnée traitée.

12. Procédé de partage selon la revendication 11, **caractérisé en ce que**, ledit deuxième terminal WAP (12, 13) répondant pour autoriser ledit partage de données après la transmission par ledit serveur WAP (22) de diffusion automatique en mode "push", ledit procédé comporte les étapes consistant à :
- transmettre, par ledit serveur (21) de partage de données vers ledit serveur WAP (22) de diffusion automatique en mode "push", au moins une commande d'émission d'au moins un message d'indication d'une demande de partage de ladite donnée,
- transmettre, par ledit serveur WAP (22) de diffusion automatique en mode "push" vers ledit deuxième terminal WAP (12, 13), ledit message d'indication de ladite demande de partage de ladite donnée,
- autoriser le partage de ladite donnée par ledit deuxième terminal WAP (12, 13) vers ledit serveur (21) de partage de données.

13. Procédé de partage d'une donnée, selon l'une des revendications 11 ou 12, **caractérisé en ce que** ledit serveur (21) de partage de données contrôle et gère au moins un droit d'accès à ladite donnée par ledit deuxième terminal WAP (12, 13) après le filtrage de ladite donnée et copie de ladite donnée en fonction dudit droit d'accès pour la transmission vers ledit deuxième terminal WAP (12, 13).

14. Procédé de partage selon l'une quelconque des revendications 11 à 13, **caractérisé en ce que**, ladite donnée étant visualisée par lesdits premier et deuxième terminaux WAP (10, 11, 12, 13), ledit partage de ladite donnée est interactif entre lesdits premier et deuxième terminaux WAP (10, 11, 12, 13) et comporte les étapes consistant à :
- transmettre, à partir de l'un desdits premier et deuxième terminaux WAP (10, 11, 12, 13) vers ledit serveur (21) de partage de données, au moins une première demande de consultation d'au moins une deuxième donnée à partir de ladite donnée partagée,
- suspendre le traitement sur ledit serveur (21) de partage de données d'une deuxième demande de consultation de données en provenance de l'un desdits premier et deuxième terminaux WAP (10, 11, 12, 13), jusqu'à la fin du traitement de ladite première demande de consultation de données,
- recevoir et stocker sur ledit serveur (21) de partage de données au moins une référence associée à ladite deuxième donnée,
- transmettre, par ledit serveur (21) de partage de données vers ledit serveur (20) de diffusion de données, une demande pour la réception de ladite deuxième donnée,
- recevoir et stocker ladite deuxième donnée sur ledit serveur (21) de partage de données en provenance dudit serveur (20) de diffusion de données,
- reconnaître par ledit serveur (21) de partage de données l'existence du partage de données entre lesdits premier et deuxième terminaux WAP (10, 11, 12, 13),
- transmettre, par ledit serveur (21) de partage de données vers ledit serveur WAP (22) de diffusion automatique en mode "push", au moins une commande d'émission d'au moins une demande de chargement de données,
- transmettre, par ledit serveur WAP (22) de diffusion automatique en mode "push" vers l'un desdits premier et deuxième terminaux WAP (10, 11, 12, 13), ladite demande de chargement de données comprenant au moins ladite référence associée à ladite deuxième donnée,
- transmettre, à partir de l'un desdits premier et deuxième terminaux WAP (10, 11, 12, 13) vers ledit serveur (21) de partage de données, au moins une réponse à ladite demande de chargement de données,
- filtrer et remettre en forme ladite deuxième donnée reçue sur ledit serveur (21) de partage de donnée,
- copier ladite deuxième donnée traitée par ledit serveur (21) de partage de données pour obtenir au moins une donnée identique à ladite deuxième donnée traitée,
- transmettre lesdites deuxièmes données identiques par ledit serveur (21) de partage de données vers lesdits premier et deuxième terminaux WAP (10, 11, 12, 13),
- visualiser par lesdits premier et deuxième terminaux WAP (10, 11, 12, 13) ladite deuxième donnée traitée.

15. Procédé de partage selon l'une quelconque des revendications 11 à 14, **caractérisé en ce que** la réponse à ladite demande de chargement de données est automatique à partir de l'un desdits premier et deuxième terminaux WAP (10, 11, 12, 13) vers ledit serveur (21) de partage de données.

16. Procédé de partage selon l'une quelconque des revendications 11 à 15, **caractérisé en ce que** l'un desdits premier et deuxième terminaux WAP (10, 11, 12, 13) répond vers ledit serveur (21) de partage de données pour autoriser le partage de ladite deuxième données, après la transmission de ladite demande de chargement de données.

## Patentansprüche

1. System zur gemeinsamen Benutzung zwischen mindestens einem ersten WAP-Terminal (10, 11), das mindestens ein Datenelement visualisiert, das sich in mindestens einem Kommunikationsnetz (30) befindet, und mindestens einem zweiten WAP-Terminal (12, 13), das mindestens eine automatische Verbreitungsfunktion im "push"-Modus in Richtung des zweiten Terminals (12, 13) ausführt, **dadurch gekennzeichnet, dass** das besagte System mindestens einen Datenverbundserver (21) umfasst, der sich in dem genannten Kommunikationsnetz (30) befindet, der geeignet ist, mindestens eine Anfrage zur gemeinsamen Benutzung des besagten vom genannten ersten WAP-Terminal (10, 11) kommenden Datenelements zu empfangen und zu speichern, und der geeignet ist, das besagte von mindestens einem Datenverbreitungsserver (20) kommende Datenelement zu empfangen, und das besagte Datenelement nach Filtern und Wiederformen, in Richtung der genannten ersten und zweiten WAP-Terminals (10, 11, 12, 13) zu übertragen, damit sie gleichzeitig mit dem besagten Datenelement fernnavigieren können, wobei die gemeinsame Benutzung des besagten Datenelements interaktiv zwischen den genannten ersten und zweiten WAP-Terminals (10, 11, 12, 13) erfolgt.

2. System zur gemeinsamen Benutzung gemäß Anspruch 1, **dadurch gekennzeichnet, dass** die gemeinsame Benutzung des besagten Datenelements mit den genannten ersten und zweiten WAP-Terminals (10, 11, 12, 13) ausgeführt wird, die in beliebiger Weise fest oder mobil mit einem festen Telekommunikationsnetz oder einem Netz für mobile Kommunikation (15) verbunden sind.

3. System zur gemeinsamen Benutzung gemäß irgendeinem der Ansprüche 1 oder 2, **dadurch gekennzeichnet, dass** die gemeinsame Benutzung des besagten Datenelements gleichzeitig mit mindestens einer mündlichen Kommunikation zwischen den genannten ersten und zweiten WAP-Terminals (10, 11, 12, 13) ausgeführt wird, über mindestens ein Telekommunikationsnetz (15).

4. System zur gemeinsamen Benutzung gemäß irgendeinem der Ansprüche 1 oder 2, **dadurch gekennzeichnet, dass** die gemeinsame Benutzung des besagten Datenelements gleichzeitig mit mindestens einer schriftlichen Kommunikation, in Echtzeit, zwischen den genannten ersten und zweiten WAP-Terminals (10, 11, 12, 13), über mindestens ein Telekommunikationsnetz (15), ausgeführt wird.

5. System zur gemeinsamen Benutzung gemäß irgendeinem der Ansprüche 1 bis 4, **dadurch gekennzeichnet, dass** das besagte Datenelement zur gemeinsamen Benutzung durch die genannten ersten und zweiten WAP-Terminals (10, 11, 12, 13) visualisiert wird, um gleichzeitig zu navigieren.

6. System zur gemeinsamen Benutzung gemäß irgendeinem der Ansprüche 1 bis 5, **dadurch gekennzeichnet, dass** der besagte Datenverbundserver (21) geeignet ist, mit mindestens einem WAP-Server (22) zur automatischen Verbreitung im "push"-Modus in Dialog zu treten, um die gemeinsame Benutzung des besagten Datenelements mit dem genannten zweiten WAP-Terminal (12, 13) auszuführen.

7. System zur gemeinsamen Benutzung gemäß irgendeinem der Ansprüche 1 bis 6, **dadurch gekennzeichnet, dass** der besagte Datenverbundserver (21) geeignet ist, mindestens eine Zugangsberechtigung zu dem besagten Datenelement durch das genannte zweite WAP-Terminal (12, 13) zu kontrollieren und zu verwalten.

8. System zur gemeinsamen Benutzung gemäß irgendeinem der Ansprüche 1 bis 7, **dadurch gekennzeichnet, dass**, während sich das genannte zweite WAP-Terminal (12, 13) in mündlicher oder schriftlicher Kommunikation mit dem genannten ersten WAP-Terminal (10, 11) befindet, das genannte zweite WAP-Terminal (12, 13) über mindestens ein Telekommunikationsnetz (15) identifiziert wird.

9. Datenverbundserver (21), der mit einem System zur gemeinsamen Benutzung gemäß irgendeinem der Ansprüche 1 bis 8 verknüpfbar ist, umfassend mindestens ein Mittel zum Empfang und zur Speicherung mindestens einer vom genannten ersten WAP-Terminal (10, 11) kommenden Anfrage zur gemeinsamen Datenbenutzung und mindestens einem gemeinsam zu benutzenden Datenelement, ein Dialog- und Übertragungsmittel mit mindestens einem Datenverbreitungsserver (20), ein Dialogmittel mit den genannten ersten und zweiten WAP-Terminals (10, 11, 12, 13), **dadurch gekennzeichnet, dass** es ein Übertragungsmittel für das besagte gemeinsam zu benutzende Datenelement, nach Filtern und Wiederformen, in Richtung der genannten ersten und zweiten WAP-Terminals (10, 11, 12, 13) umfasst, ein Mittel zum Empfang und zur Speicherung mindestens eines Parameters, der für die gemeinsame Benutzung des besagten Datenelements notwendig ist, ein Mittel zum Filtern und Wiederformen des besagten gemeinsam zu benutzenden Datenelements, ein Kontroll- und Verwaltungsmittel für mindestens eine Zugangsberechtigung zu dem besagten Datenelement durch das genannte zweite WAP-Terminal (12, 13), ein Erkennungs- und Verwaltungsmittel für mindestens eine interaktive gemeinsame Benutzung des besagten Datenelements zwischen den genannten ersten und zweiten WAP-Terminals (10, 11, 12, 13), ein Dialog- und Übertragungsmittel mit mindestens einem WAP-Server für die automatische Verbreitung im "push"-Modus, ein Dialog- und Übertragungsmittel mit mindestens einem Telekommunikationsnetz (15), um mindestens die Identifizierung des genannten zweiten WAP-Terminals, (12, 13) zu kennen.

10. Datenverbundserver (21), der mit einem System zur gemeinsamen Benutzung gemäß Anspruch 9 verknüpft ist, **dadurch gekennzeichnet, dass** der besagte Datenverbundserver (21) mit einer Datenbank zur Informationsspeicherung verbunden ist.

11. Verfahren zur gemeinsamen Benutzung zwischen mindestens einem ersten WAP-Terminal (10, 11), das mindestens ein Datenelement visualisiert, das sich in mindestens einem Kommunikationsnetz (30) befindet, und mindestens einem zweiten WAP-Terminal (12, 13), das mindestens eine automatische Verbreitungsfunktion im "push"-Modus ausführt, wobei das besagte Verfahren die Stufen aufweist, die bestehen aus:
- visualisieren durch mindestens ein ersten WAP-Terminal (10, 11) mindestens eines Datenelements, das aus mindestens einem Datenverbreitungsserver (20), der sich in mindestens einem Kommunikationsnetz (30) befindet, kommt ;
- empfangen und speichern, auf mindestens einem Datenverbundserver (21), mindestens einer von dem genannten ersten WAP-Terminal (10, 11) kommenden Anfrage zur gemeinsamen Benutzung des besagten Datenelements ;
- empfangen und speichern auf genanntem Datenverbundserver (21) mindestens eines Parameters, der für die gemeinsame Benutzung des besagten Datenelements notwendig ist ;
- übertragen einer Anfrage zum Empfang des besagten Datenelements durch genannten Datenverbundserver (21) in Richtung des genannten Datenverbreitungsservers (20) ;
- empfangen und speichern des besagten von dem Datenverbreitungsserver (20) kommenden Datenelements auf dem genannten Datenverbundserver (21) ;
- übertragen mindestens eines Befehls zum Senden mindestens einer Anfrage zum automatischen Datenladung, durch den genannten Datenverbundserver (21) in Richtung mindestens eines WAP-Servers (22) zur automatischen Verbreitung im "push"-Modus ;
- übertragen der besagten Anfrage zum automatischen Datenladung, die mindestens eine Referenz, die dem besagten Datenelement zugeordnet ist, beinhaltet, durch den genannten WAP-Server (22) zur automatischen Verbreitung im "push"-Modus in Richtung des genannten zweiten WAP-Terminals (12, 13) ;
- übertragen, ausgehend von dem genannten zweitem WAP-Terminal (12, 13) in Richtung des genannten Datenverbundservers (21), mindestens einer Antwort auf die besagte Anfrage zum automatischen Datenladung ;
- filtern und wiederformen des besagten Datenelements, das auf dem besagten Datenverbundserver (21) empfangen wurde ;
- kopieren des besagten Datenelements, das vom genannten Datenverbundserver (21) bearbeitetet wurde, um mindestens ein Datenelement zu erhalten, das identisch mit dem bearbeiteten Datenelement ist ;
- übertragen der besagten identischen Daten, durch den genannten Datenverbundserver (21) in Richtung der genannten ersten und zweiten WAP-Terminals (10, 11, 12, 13),
- visualisieren des besagten bearbeiteten Datenelements durch die genannten ersten und zweiten WAP-Terminals (10, 11, 12, 13).

12. Verfahren zur gemeinsamen Benutzung gemäß Anspruch 11, **dadurch gekennzeichnet, dass** das genannte zweite WAP-Terminal (12, 13) antwortet, um die genannte gemeinsame Benutzung der Daten nach der Übertragung durch den genannten WAP-Server (22) zur automatischen Verbreitung im "push"-Modus zu genehmigen, wobei das besagte Verfahren die Stufen aufweist, die bestehen aus:
- übertragen, durch den genannten Datenverbundserver (21) in Richtung mindestens eines WAP-Servers (22) zur automatischen Verbreitung im "push"-Modus, mindestens eines Befehls zum Senden mindestens einer Nachricht, die eine Anfrage zur gemeinsamen Benutzung des genannten Datenelements meldet;
- übertragen der besagten Nachricht, die die genannte Anfrage zur gemeinsamen Benutzung des genannten Datenelements meldet, durch den genannten WAP-Server (22) zur automatischen Verbreitung im "push"-Modus in Richtung des genannten zweiten WAP-Terminals (12,13);
- autorisieren, durch den genannten zweiten WAP-Terminal (12, 13) in Richtung des genannten Datenverbundservers (21), der gemeinsamen Benutzung des genannten Datenelements.

13. Verfahren zur gemeinsamen Benutzung eines Datenelements, einem der Ansprüche 11 oder 12 gemäß, **dadurch gekennzeichnet, dass** der genannte Datenverbundserver (21) mindestens eine Zugangsberechtigung durch das genannte zweite WAP-Terminal (12, 13) zu dem besagten Datenelement, nach dem Filtern des besagten Datenelements, kontrolliert und verwaltet, und das besagte Datenelement kopiert, je nach besagter Zugangsberechtigung zur Übermittlung in Richtung des genannten zweiten WAP-Terminals (12, 13).

14. Verfahren zur gemeinsamen Benutzung, irgendeinem der Ansprüche 11 bis 13 gemäß, **dadurch gekennzeichnet, dass**, nachdem das besagte Datenelement durch die genannten ersten und zweiten WAP-Terminals (10, 11, 12, 13) visualisiert ist, die genannte gemeinsame Benutzung des besagten Datenelements interaktiv zwischen den genannten ersten und zweiten WAP-Terminals (10, 11, 12, 13) erfolgt und die Stufen aufweist, die bestehen aus:
- übertragen, von einem der genannten ersten und zweiten WAP-Terminals (10, 11, 12, 13) aus in Richtung des genannten Datenverbundservers (21), mindestens einer ersten von dem genannten Datenelement zur gemeinsamen Benutzung ausgehenden Anfrage, mindestens ein zweites Datenelement hinzuzuziehen ;
- einstellen der Bearbeitung auf dem genannten Datenverbundserver (21) einer zweiten Anfrage aus einem der genannten ersten und zweiten WAP-Terminals (10, 11, 12, 13), Daten hinzuzuziehen, bis zur Beendigung der Bearbeitung der besagten ersten Anfrage, Daten hinzuzuziehen ;
- empfangen und speichern mindestens einer dem besagten zweiten Datenelement zugeordneten Referenz auf dem genannten Datenverbundserver (21) ;
- übertragen einer Anfrage zum Empfang des besagten zweiten Datenelements durch den genannten Datenverbundserver (21) in Richtung des genannten Datenverbreitungsservers (20) ;
- empfangen und speichern des besagten von dem genannten Datenverbreitungsserver (20) kommenden zweiten Datenelements auf dem genannten Datenverbundserver (21);
- erkennen, durch den genannten Datenverbundserver (21), des Vorhandenseins der gemeinsamen Benutzung von Daten zwischen den genannten ersten und zweiten WAP-Terminals (10, 11, 12, 13) ;
- übertragen mindestens eines Befehls zum Senden aus mindestens einer Anfrage zum Datenladung durch genannten Datenverbundserver (21) in Richtung des genannten WAP-Servers (22) zur automatischen Verbreitung im "push"-Modus ;
- übertragen besagter Anfrage zum Datenladung, die mindestens die genannte dem besagten zweiten Datenelement zugeordnete Referenz beinhaltet, durch genannten WAP-Server (22) zur automatischen Verbreitung in "push"-Modus in Richtung eines der genannten ersten und zweiten WAP-Terminals (10, 11, 12, 13) ;
- übertragen, ausgehend von einem der genannten ersten und zweiten WAP-Terminals (10, 11, 12, 13) in Richtung des genannten Datenverbundservers (21), mindestens einer Beantwortung der genannten Anfrage zum Datenladung ;
- filtern und wiederformen des besagten zweiten Datenelements, das auf dem genannten Datenverbundserver (21) empfangen wurde ;
- kopieren des besagten zweiten Datenelements, das auf dem genannten Datenverbundserver (21) bearbeitet wurde, um mindestens ein Datenelement zu erhalten, das mit dem besagten zweiten bearbeiteten Datenelement identisch ist ;
- übertragen der besagten zweiten identischen Daten durch genannten Datenverbundserver (21) in Richtung der genannten ersten und zweiten WAP-Terminals (10, 11, 12, 13) ;
- visualisieren des besagten zweiten bearbeiteten Datenelements durch die genannten ersten und zweiten WAP-Terminals (10, 11, 12, 13).

15. Verfahren zur gemeinsamen Benutzung, irgendeinem der Ansprüche 11 bis 14 gemäß, **dadurch gekennzeichnet, dass** die Beantwortung der genannten Anfrage zum Datenladung automatisch ausgehend von einem der genannten ersten und zweiten WAP-Terminals (10, 11, 12, 13) in Richtung des genannten Datenverbundserver (21) erfolgt.

16. Verfahren zur gemeinsamen Benutzung, irgendeinem der Ansprüche 11 bis 15 gemäß, **dadurch gekennzeichnet, dass** einer der genannten ersten und zweiten WAP-Terminals (10, 11, 12, 13) in Richtung des genannten Datenverbundserver (21) antwortet, um die gemeinsame Benutzung des zweiten Datenelements nach der Übertragung der genannten Anfrage zum Datenladung zu autorisieren.

## Claims

1. A system for sharing data objects between a first WAP terminal (10, 11) displaying a data object situated in a communications network (30) and a second WAP terminal (12, 13), said system having functions that include automatic "push" mode broadcasting to the second terminal (12, 13) and being **characterized in that** it comprises at least a data object sharing server (21) situated in said communications network (30), adapted to receive and store at least a request to share said data object from said first WAP terminal (10, 11) and adapted to receive said data object from at least a data broadcasting server (20) and to send said data object after filtering and reshaping to said first and second WAP terminals (10, 11, 12, 13) for simultaneous remote browsing of said data object, the sharing of said data object between said first and second WAP terminals (10, 11, 12, 13) being interactive.

2. A data object sharing system according to claim 1, **characterized in that** said data object is shared with said first and second WAP terminals (10, 11, 12, 13) connected interchangeably in fixed mode or in mobile mode to a fixed or cellular telecommunications network (15).

3. A data object sharing system according to claim 1 or claim 2, **characterized in that** said data object is shared between said first and second WAP terminals (10, 11, 12, 13) at the same time as at least a voice communication between said first and second WAP terminals (10, 11, 12, 13) via a telecommunications network (15).

4. A data object sharing system according to claim 1 or claim 2, **characterized in that** said data object is shared between said first and second WAP terminals (10, 11, 12, 13) at the same time as at least an instantaneous text communication between said first and second WAP terminals (10, 11, 12, 13) via a telecommunications network (15).

5. A data object sharing system according to any one of claims 1 to 4, **characterized in that** said shared data object is displayed by said first and second WAP terminals (10, 11, 12, 13) to be browsed simultaneously thereby.

6. A data object sharing system according to any one of claims 1 to 5, **characterized in that** said data object sharing server (21) is adapted to dialogue with an automatic "push" mode broadcasting WAP server (22) to share said data object with said second WAP terminal (12, 13).

7. A data object sharing system according to any one of claims 1 to 6, **characterized in that** said data object sharing server (21) is adapted to control and to manage at least a right of access to said data object by said second WAP terminal (12, 13).

8. A data object sharing system according to any one of claims 1 to 7, **characterized in that** said second WAP terminal (12, 13) in voice or text communication with said first WAP terminal (10, 11) is identified by said telecommunications network (15).

9. A data object sharing server (21) adapted to be associated with a data object sharing system according to any one of claims 1 to 8, comprising means adapted to receive and store at least a request to share a data object from said first WAP terminal (10, 11) and at least a data object to be shared, transmission means adapted to dialogue with at least a data broadcasting server (20), and means adapted to dialogue with said first and second WAP terminals (10, 11, 12, 13), **characterized in that** it further comprises means adapted to send said data object to be shared after filtering and reshaping it to said first and second WAP terminals (10, 11, 12, 13), means adapted to receive and store at least a parameter necessary for the sharing of said data object, means adapted to filter and reshape said data object to be shared, means adapted to control and manage at least a right of access to said data object by said second WAP terminal (12, 13), means adapted to recognize and manage interactive sharing of said data object between said first and second WAP terminals (10, 11, 12, 13), transmission means adapted to dialogue with at least an automatic "push" mode broadcasting WAP server (22), and transmission means adapted to dialogue with a telecommunications network (15) to obtain the identification of said second WAP terminal (12, 13).

10. A data object sharing server (21) associated with a data object sharing system according to claim 9, **characterized in that** said data object sharing server (21) is connected to a database adapted to store informations.

11. A method of sharing data objects between a first WAP terminal (10, 11) displaying a data object situated in a communications network (30) and an automatic "push" mode broadcasting WAP server (22), said method including the steps of:
- a first WAP terminal (10, 11) displaying at least a data object coming from at least a data object broadcast server (20) situated in a communications network (30);
- at least a data object sharing server (21) receiving from said first WAP terminal (10, 11) at least a request to share said data object and storing said request;
- said data object sharing server (21) receiving and storing at least a parameter necessary for sharing said data object;
- said data object sharing server (21) sending said data object broadcast server (20) a request to receive said data object;
- said data object sharing server (21) receiving said data object from said data object broadcast server (20) and storing said data object;
- said data object sharing server (21) sending at least an automatic "push" mode broadcasting WAP server (22) at least a command to send a request for automatic loading of data objects;
- said automatic "push" mode broadcasting WAP server (22) sending said second WAP terminal (12, 13) said request for automatic loading of data objects, said request comprising at least a reference associated with said data object;
- said second WAP terminal (12, 13) sending said data object sharing server (21) at least a response to said request for automatic loading of data objects;
- said data object sharing server (21) filtering and shaping said data object it has received;
- said data object sharing server (21) copying said processed data object to obtain at least a data object identical to said processed data object;
- said data object sharing server (21) sending said identical data objects to said first and second WAP terminals (10, 11, 12, 13); and
- said first and second WAP terminals (10, 11, 12, 13) displaying said processed data object.

12. A data object sharing method according to claim 11, **characterized in that** said second WAP terminal (12, 13) responds to the transmission by said automatic "push" mode broadcasting WAP server (22) by authorizing said sharing of data objects and said method comprises the steps of:
- said data object sharing server (21) sending said automatic "push" mode broadcasting WAP server (22) at least a command to send a message indicating a request to share said data object;
- said automatic "push" mode broadcasting WAP server (22) sending said second WAP terminal (12, 13) said message indicating said request to share said data object;
- said second WAP terminal (12, 13) authorizing said data object sharing server (21) to share said data object.

13. A data object sharing method sharing data objects, **characterized in that** said data object sharing server (21) controls and manages at least a right of access to said data object by said second WAP terminal (12, 13) after filtering of said data object and copying of said data object as a function of said right of access for the purposes of transmission to said second WAP terminal (12, 13).

14. A data object sharing method according to any one of claims 11 to 13, **characterized in that** said data object is displayed by said first and second WAP terminals (10, 11, 12, 13) and said sharing of said data object between said first and second WAP terminals (10, 11, 12, 13) is interactive and includes the steps of:
- said first or said second WAP terminal (10, 11, 12, 13) sending said data object sharing server (21) at least a first request to consult at least a second data object from said shared data object;
- suspending processing on said data sharing server (21) of a second request from one of said first and second WAP terminals (10, 11, 12, 13) to consult data objects until the end of processing of said first request to consult a second data object;
- said data object sharing server (21) receiving and storing at least a reference associated with said second data object;
- said data object sharing server (21) sending said data object broadcast server (20) a request to receive said second data object;
- said data object sharing server (21) receiving said second data object from said data broadcast server (20) and storing said second data object;
- said data object sharing server (21) recognizing the existence of the sharing of data objects between said first and second WAP terminals (10, 11, 12, 13);
- said data object sharing server (21) sending said automatic "push" mode broadcasting WAP server (22) at least a command to send a request to load data objects;
- said automatic "push" mode broadcasting WAP server (22) sending said first or said second WAP terminal (10, 11, 12, 13) said request to load data objects, which includes at least said reference associated with said second data object;
- said first or said second WAP terminal (10, 11, 12, 13) sending said data object sharing server (21) at least a response to said request to load data objects;
- said data object sharing server (21) filtering and reshaping said received second data object;
- said data object sharing server (21) copying said processed second data object to obtain at least a data object identical to said processed second data object;
- said data object sharing server (21) sending said first and second WAP terminals (10, 11, 12, 13) said identical second data objects; and
- said first and second WAP terminals (10, 11, 12, 13) displaying said processed second data object.

15. A data object sharing method according to any one of claims 11 to 14, **characterized in that** the response to said request to load data objects is sent automatically from said first or said second WAP terminal (10, 11, 12, 13) to said object data sharing server (21).

16. A data object sharing method according to any one of claims 11 to 15, **characterized in that**, after said request to load data objects is sent, said first or said second WAP terminal (10, 11, 12, 13) responds to said data object sharing server (21) by authorizing the sharing of said second data object.
